# EUROPEAN PATENT APPLICATION

(11) **EP 1 207 604 A1**
(43) Date of publication of application: **22.05.2002**
(21) Application number: 01126855.4
(22) Date of filing: 12.11.2001
(51) Int. Cl.: H02G 3/06

(54) **An angle connector for cable ducts**

(30) Priority: 14.11.2000 IT TO001061
(71) Applicant: Legrand S.p.A., 20080 Zibido San Giacomo (Milano) (IT)
(72) Inventor: Garassino, Luca, 15067 Novi Ligure (Alessandria) (IT); Marengo, Massimo, 15011 Acqui Terme (Alessandria) (IT)
(74) Representative: Quinterno, Giuseppe

(57) **Abstract**

An angle connector for cable ducts comprises a pair of hollow, channel-shaped bodies (3a, 3b) of substantially rectangular cross-section. The hollow bodies (3a, 3b) have respective first ends articulated to one another about a common axis of pivoting (A) which extends through both hollow bodies (3a, 3b) and parallel to a pair of opposed main walls (11a, 13a; 11b, 13b), the second ends of the hollow bodies (3a, 3b) being arranged for connection to other elements (25, 27) of the duct. In the region of the first ends of the hollow bodies (3a, 3b), the main walls (11a, 13a; 11b, 13b) have respective arcuate appendages (12a, 14a; 12b, 14b) which overlap so as to be slidable relative to one another so that, following the relative pivoting of the two hollow bodies (3a, 3b) about the axis (A) within a predetermined angular range, the two hollow bodies (3a, 3b) constitute a unit substantially closed from the outside environment.

## Description

The present invention relates to variable-angle connectors for cable ducts.

In particular, the invention relates to an angle connector for cable ducts, comprising a pair of hollow, channel-shaped bodies of substantially rectangular cross-section, the bodies having respective first ends articulated to one another about a common axis of pivoting which extends through both of the hollow bodies and parallel to a pair of opposed main walls, the second ends of the hollow bodies being arranged for connection to other elements of the duct.

An angle connector of the type defined above is known from European patent application EP-823 762. The connector of this document has an arcuate auxiliary wall coaxial with the axis of articulation of the two bodies and interposed between these bodies in order to close the corner region of the connector from the outside environment. This arcuate wall extends in a pair of arcuate slots of corresponding shape formed in a pair of opposed walls of the two hollow bodies so that it can rotate partially about the articulation axis of the connector upon variations in the angular arrangement of the connector. However, the connector of this solution requires the provision of additional elements and the formation of the arcuate slots which renders it quite expensive to produce.

The document US-1 727 772 also describes an angle connector of the above-mentioned type. In this case, the pivot axis of the two hollow bodies which constitute the connector is formed by a shaft which extends through the connector from side to side and is housed in a tubular portion formed integrally with a side wall of one of the two hollow bodies.

This solution is also quite expensive to implement and, moreover, the presence of the tubular body through which the shaft extends renders the connector unsuitable for ensuring effective closure of the duct from the outside environment.

In order to overcome the above-mentioned disadvantages of known solutions, the subject of the invention is an angle connector of the type mentioned at the beginning of the description, characterized in that the main walls have respective arcuate appendages in the region of the first ends of the hollow bodies, and in that the appendages overlap so as to be slidable relative to one another in the condition of use of the connector so that, following relative pivoting of the two hollow bodies about the axis within a predetermined angular range, the two hollow bodies constitute a unit substantially closed from the outside environment.

By virtue of these characteristics, the connector according to the invention is distinguished by a structure which is simple and hence relatively inexpensive to produce and which closes the connector effectively from the outside environment so as to prevent foreign bodies such as dust or moisture from entering the connector. Moreover, by virtue of the presence of the appendages which are slidable relative to one another, one of the appendages may be of a size such that its free end constitutes an abutment surface for limiting the angular travel of the connector.

Further characteristics and advantages of the invention will become clearer from the following detailed description, provided purely by way of non-limiting example with reference to the appended drawings, in which:
Figure 1 is an exploded, perspective view which shows a portion of a cable duct including an angle connector according to the invention, in the open condition,
Figure 2 is a view similar to that of Figure 1, showing the duct in the closed condition,
Figures 3 and 4 are views similar to those of Figures 1 and 2, respectively, showing a first variant of the invention,
Figures 5 and 6 are views similar to those of Figures 1 and 2, respectively, showing another variant of the invention, and
Figures 7 and 8 are views similar to those of Figures 1 and 2, respectively, showing a further variant of the invention.

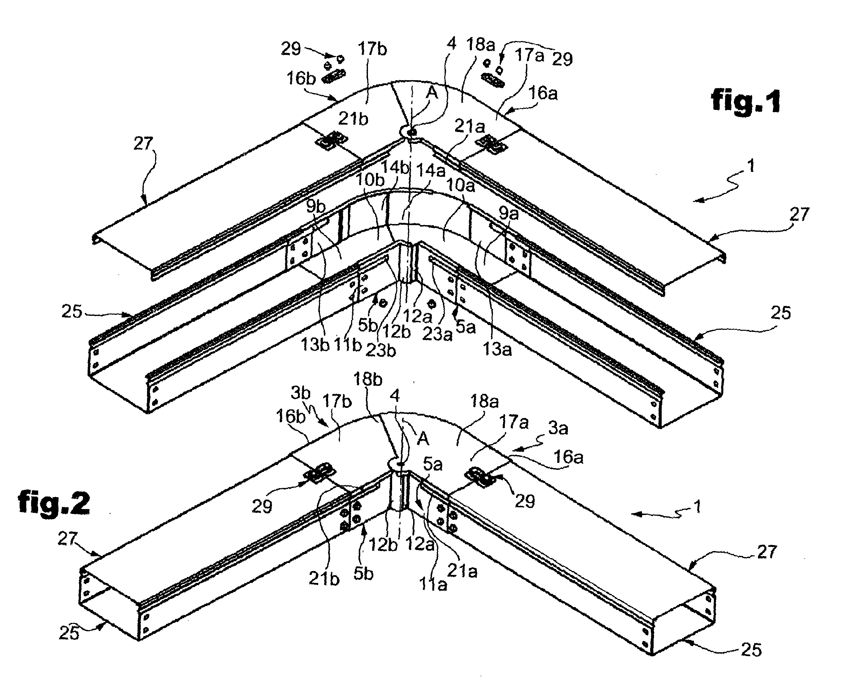

With initial reference to Figures 1 and 2, a portion of a cable duct, indicated 1, comprises a variable-angle connector. The connector includes two hollow bodies 3a and 3b articulated to one another by a pair of hinges 4 (only one of which is visible in Figures 1 and 2) which define a common articulation axis A of the connector.

Each of the bodies 3a, 3b is formed as a closed channel of substantially rectangular cross-section. In particular, the body 3a comprises an open-topped, channel-shaped base body 5a having a straight base wall 9a from which a curved portion 10a extends. A pair of opposed walls 11a and 13a extend from the base wall 9a, perpendicular thereto, and opposed arcuate appendages 12a and 14a extend from the curved portion 10a, also perpendicular to the portion 10a, the appendage 12a being disposed closer to the axis A and on the inside of the angle formed by the connector, whereas the appendage 14a is disposed on the outside of this angle and spaced farther from the axis A. Each of the two appendages 12a and 14a has a radius of curvature substantially equal to its distance from the axis A.

In exactly the same way as the hollow body 3a, the hollow body 3b comprises an open-topped, channel-shaped base body 5b which includes a straight base wall 9b from which parallel side walls 11b and 13b extend. The base wall 9b is extended by a curved portion 10b defined laterally by arcuate lateral appendages 12b, 14b.

The arcuate appendages 12a, 12b, as well as the arcuate appendages 14a, 14b, overlap one another so as to be slidable relative to one another as a result of relative pivoting of the bodies 3a and 3b about the axis A. The portions 10a and 10b also overlap one another.

On top of the connector formed by the bodies 5a, 5b, there is a covering portion which comprises a first cover 16a and a second cover 16b articulated to one another by a hinge 4. Each cover 16a, 16b has a respective straight, flat wall 17a, 17b from which a curved portion 18a, 18b, having a general axis coaxial with the axis A, extends at the end facing towards the axis A, the portions 18a and 18b partially overlapping one another.

Respective grooves 23a, 23b formed on the side walls 11a, 11b and 13a, 13b of the bodies 5a and 5b can be snap-engaged by corresponding ribs 21a, 21b formed by flanges perpendicular to the walls 17a and 17b of the covers 16a and 16b so that the covers 16a and 16b can be locked onto the bodies 5a and 5b to render the angle connector completely closed from the outside environment.

The opposite ends of the connector are arranged for connection to other cable-duct elements, for example, to straight portions 25 provided with respective covers 27. For this purpose, plate-like connection elements with holes which can be engaged by a plurality of screws extending through holes provided in the side walls 11a, 11b, 13a, 13b and in the corresponding side walls of the duct portions 25 may be used.

Earthing units are advantageously provided for ensuring electrical continuity between the covers 27 and the covers 16a, 16b of the angle connector and comprise respective bosses both on the free ends of the covers of the connector and on the facing ends of the covers of the remaining duct sections, for engagement by screws, with the interposition of connection plates 29.

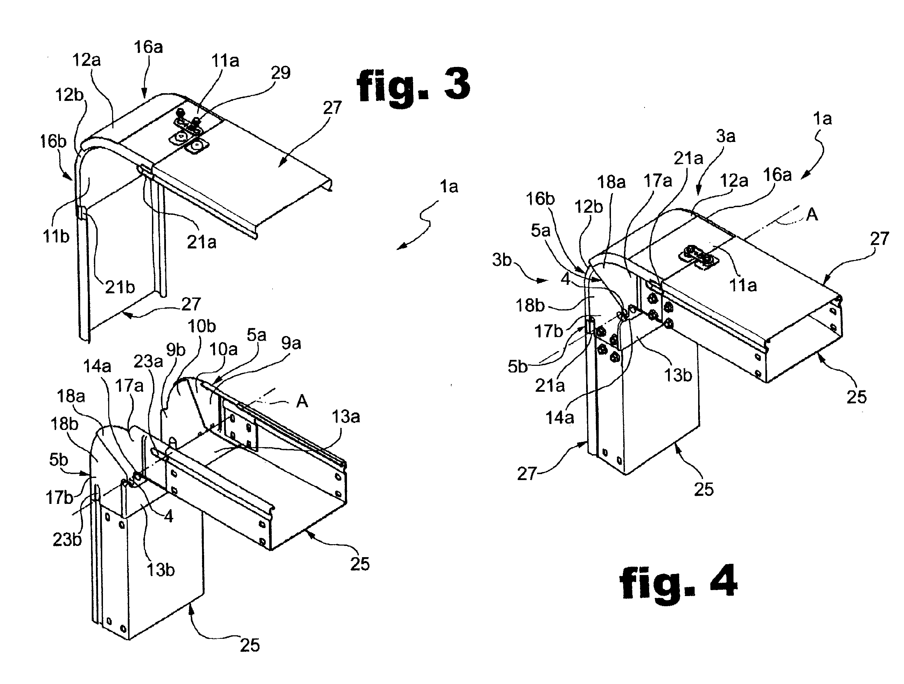

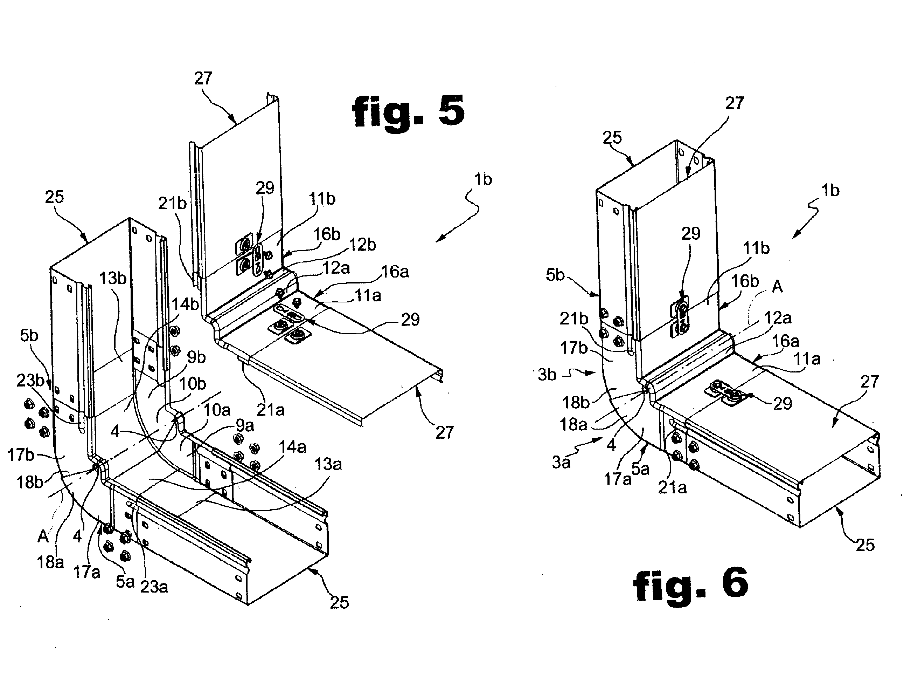

Figures 3 and 4, in which the same reference numerals have been used to indicate elements identical or similar to those shown in Figures 1 and 2, show a first variant of the cable duct, generally indicated 1a, comprising a variable-angle connector according to the invention.

In this variant, the connector comprises two open, channel-shaped bodies 5a and 5b each of which has a base wall including a respective flat portion 13a, 13b from which a respective arcuate appendage 14a, 14b extends. A pair of perpendicular side walls 9a, 17a each having a curved extension 10a, 18a also extend from the wall 13a. Similarly, a pair of perpendicular side walls 17b and 9b each having a curved extension 18b, 10b extend from the wall 13b. In particular, the portions 10a, 10b and the portions 18a, 18b, respectively, overlap one another.

A cover constituted by a pair of separate, removable covers 16a, 16b is positioned on top of the bodies 5a and 5b. Each of the covers 16a, 16b comprises a flat portion 11a, 11b from which an arcuate appendage 12a, 12b extends. The appendages 12a, 12b, and 14a, 14b overlap one another so as to be slidable as a result of variation of the angular configuration of the connector 1a. To enable the covers 16a and 16b to be connected quickly to the bodies 5a and 5b, grooves 23a, 23b are formed on the side walls 17a, 9a and 17b, 9b of the bodies 5a and 5b and can be snap-engaged by ribs 21a, 21b formed on flanges which extend laterally on the portions 11a and 11b of the covers 16a, 16b.

Figures 5 and 6 show a second variant of the cable duct, generally indicated 1b, which comprises a variable-angle connector according to the invention, the same reference numerals being used to indicate elements identical or similar to those shown in Figures 1 and 2.

According to this variant, each of the base bodies 5a and 5b has a base wall having a flat portion 13a, 13b connected to which is an arcuate appendage 14a, 14b, the appendages 14a, 14b partially overlapping and being mounted so as to be slidable relative to one another as a result of variation of the angular arrangement of the connector 1b.

Respective pairs of side walls 17a, 9a, 17b, 9b and curved extensions 18a, 10a, 18b, 10b extend perpendicularly from the walls 13a, 13b and from the appendages 14a, 14b. Grooves 23a, 23b are formed on the side walls 17a, 9a and 17b, 9b for the snap-engagement of ribs 21a, 21b formed on perpendicular flanges of covers 16a, 16b, each of which has a flat portion 11a, 11b and a respective arcuate appendage 12a, 12b. As in the embodiments described above, the appendages 12a and 12b overlap so as to be slidable relative to one another.

A cover 27 of an adjacent cable-duct section can be connected to the end of each cover portion 11a, 11b remote from the appendages 12a, 12b, respective earthing bosses connectible by means of plates 29, being provided in positions in the vicinity of the edges of the portion 11a, 11b and of the covers 27.

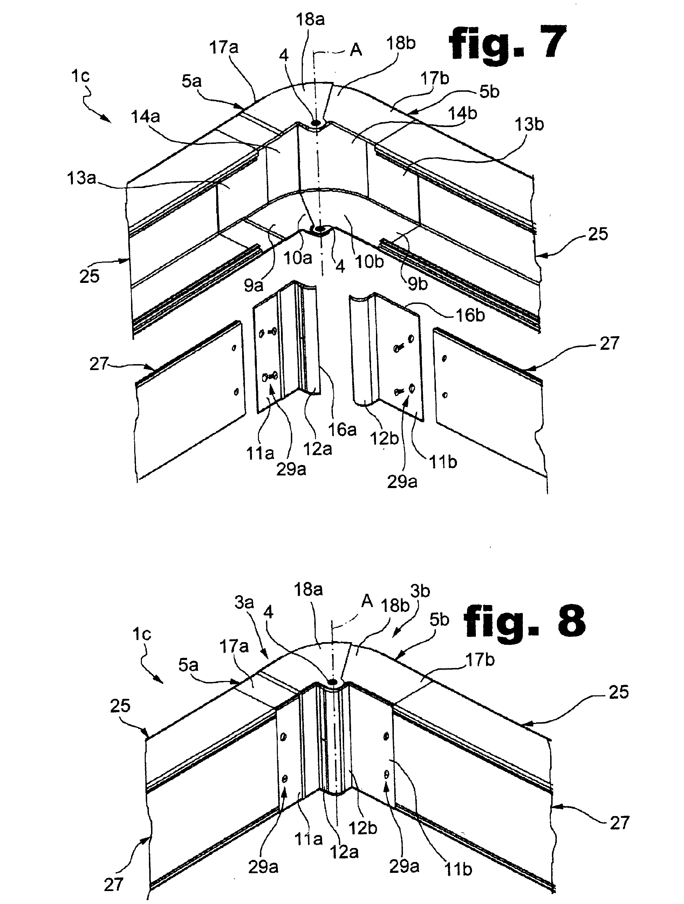

Figures 7 and 8, in which elements identical or similar to those of the variant of Figures 5 and 6 are indicated by the same reference numerals, show a third variant of the cable-duct according to the invention, generally indicated 1c. In this variant, the covers 16a, 16b are preferably connected directly to portions of the covers 27 of the cable-duct sections adjacent the connector 1c by means of screws 29a which engage holes formed both in the flat walls 11a, 11b of the covers 16a, 16b and in portions of the covers 27 in the vicinity of their ends and thus constitute both mechanical connection means and electrical connection means.

By virtue of the presence of the appendages 12a, 12b, the angle connector of the invention enables a highly effective seal from the outside environment to be formed so as to prevent dust, moisture, or foreign bodies entering the duct in the region of the angle connector, in any of its possible angular configurations. Moreover, the extent of one of the angular appendages 12a, 12b can be defined in a manner such that its end edge remote from the respective flat portion 11a, 11b constitutes an abutment surface with the function of a travel limit for limiting the minimum angulation of the connector which can be reached by the pivoting of the base bodies 5a, 5b about the common articulation axis A.

Naturally, the principle of the invention remaining the same, the forms of embodiment and details of construction may be varied widely with respect to those described and illustrated purely by way of non-limiting example, without thereby departing from the scope of protection of the present invention defined by the appended claims. This applies in particular to the selection of the systems for earthing the duct which are not intended to be restricted to the form adopted in combination with a specific variant of the duct described in the example.

## Claims

1. An angle connector for cable ducts comprising a pair of hollow, channel-shaped bodies (3a, 3b) of substantially rectangular cross-section, the bodies (3a, 3b) having respective first ends articulated to one another about a common axis of pivoting (A) which extends through both hollow bodies (3a, 3b) and parallel to a pair of opposed main walls (11a, 13a; 11b, 13b), the second ends of the hollow bodies (3a, 3b) being arranged for connection to other elements (25, 27) of the duct,
**characterized in that** the main walls (11a, 13a; 11b, 13b) have respective arcuate appendages (12a, 14a; 12b, 14b) in the region of the first ends of the hollow bodies (3a, 3b), and **in that** the appendages (12a, 12b; 14a, 14b) overlap so as to be slidable relative to one another in the condition of use of the connector so that, following relative pivoting of the two hollow bodies (3a, 3b) about the axis (A), within a predetermined angular range, the two hollow bodies (3a, 3b) constitute a unit substantially closed from the outside environment.

2. A connector according to Claim 1, **characterized in that** each of the arcuate appendages (12a, 12b; 14a, 14b) has a radius of curvature corresponding to its distance from the common axis (A).

3. A connector according to Claim 1 or Claim 2, **characterized in that** each hollow body (3a, 3b) comprises an open, channel-shaped base body (5a, 5b) including a base wall (9a, 10a; 9b, 10b) from which a pair of side walls (11a, 13a; 11b, 13b) extend perpendicularly, the two base bodies (5a, 5b) being articulated about the common axis (A) in the region of their base walls (9a, 10a; 9b, 10b), there being associated with each base body (5a, 5b) a respective removable cover (16a, 16b) which includes a substantially straight flat portion (17a, 17b) from which a respective curved flat portion (18a, 18b) extends integrally.

4. A connector according to Claim 1 or Claim 2, **characterized in that** each hollow body (3a, 3b) comprises an open, channel-shaped base body (5a, 5b) including a base wall (13a, 14a; 13b, 14b) from which a pair of side walls (9a, 17a; 9b, 17b) extend perpendicularly, the two base bodies (5a, 5b) being articulated about the common axis (A) in the region of their side walls (9a, 10a, 17a, 18a; 9b, 10b, 17b, 18b), there being associated with each base body (5a, 5b) a respective removable cover (16a, 16b) which includes a substantially flat portion (11a, 11b) from which a respective arcuate appendage (12a, 12b) extends integrally.

5. A connector according to Claim 3 or Claim 4, **characterized in that** the removable covers (16a, 16b) can be connected to respective base bodies (5a, 5b) by snap-coupling means (21a, 23a; 21b, 23b).

6. A connector according to Claim 5, **characterized in that**, engagement elements (23a, 23b) are formed in the vicinity of the free edges of the side walls (11a, 13a; 9a, 17a; 11b, 13b; 9b, 17b) of the base bodies (5a, 5b) and can be snap-engaged by corresponding engagement elements (21a, 21b) which extend from the side edges of the substantially flat portions (17a; 11a; 17b; 11b) of the removable covers (16a, 16b).

7. A connector according to any one of Claims 3 to 6, **characterized in that** the substantially flat portions (17a; 11a; 17b; 11b) of the removable covers (16a, 16b) have electrical connection members (29; 29a) which can be connected to corresponding electrical connection members associated with the covers (27) of the other elements of the duct in order to establish electrical continuity between the covers of the connector (16a, 16b) and the other covers (27) of the duct.
